# EUROPEAN PATENT SPECIFICATION

(11) **EP 1 185 041 B1**
(45) Date of publication and mention of the grant of the patent: **10.10.2007**
(21) Application number: 01480051.0
(22) Date of filing: 05.07.2001
(51) Int. Cl.: H04L 12/56

(54) **OSPF autonomous system with a backbone divided into two sub-areas**
Autonomes OSPF-System mit einem in zwei Teilbereichen getrennten Haupnetz
Système autonome OSPF avec un réseau de base divisé en deux sous-régions

(30) Priority: 29.08.2000 EP 00480081
(43) Date of publication of application: 06.03.2002
(73) Proprietor: International Business Machines Corporation, Armonk, NY 10504 (US)
(72) Inventor: Galand, Claude, 06480 La Colle/Loup (FR); Le Pennec, Jean-François, 06100 Nice (FR)
(74) Representative: Etorre, Yves Nicolas

(56) References cited:
- APOSTOLOPOULUS G. ET AL.: "QoS Routing Mechanisms and OSPF Extensions" REQUEST FOR COMMENTS (RFC) 2676, [Online] August 1999 (1999-08), pages 1-50, XP002263770 Retrieved from the Internet: <URL:http://www.faqs.org/ftp/rfc/pdf/rfc26 76.txt.pdf> [retrieved on 2003-12-03]
- MOY J: "OSPF Version 2" REQUEST FOR COMMENTS (RFC) 2328, [Online] April 1998 (1998-04), pages 1-244, XP002263771 Retrieved from the Internet: <URL:http://www.faqs.org/ftp/rfc/pdf/rfc23 28.txt.pdf> [retrieved on 2003-12-03]

## Description

### Technical field

The present invention relates to the autonomous systems wherein the routing of data is managed by the OSPF (Open Shortest-Path First) protocol, such systems which comprise a plurality of contiguous IP networks being divided into several areas, and relates in particular to such an autonomous system having a backbone area divided into two sub-areas.

### Background

Today, it is current that a plurality of contiguous networks are grouped in a large entity called an Autonomous System (AS). The AS is under a common administration that shares a common routing strategy managed by the OSPF (Open Shortest Path First) protocol. OSPF is a link-state routing protocol that calls for sending of link-state advertisements (LSA) to all other routers within a particular area. Such LSAs include information on attached interfaces, metrics being used and other variables.

An AS is generally divided into a number of areas which are groups of contiguous networks and attached hosts. Routers with multiple interfaces can participate in multiple areas, such routers being called area border routers. Each router maintains a data base describing the AS topology. A topological data base is essentially an overall picture of networks in relationship to routers. The topological data base contains the collection of LSAs received from all routers in the same area. Because the routers within the same area share the same information, they have identical topological data bases. Each individual piece of a topological data base is a particular router local state (e.g. the router's usable interfaces and reachable neighbors).

All routers of a same area run the same algorithm in parallel. From its topological data base, each router constructs a tree of shortest paths with itself as a root. This shortest path tree gives the route to each destination in the AS.

The topology of an area is hidden from the rest of the AS. This information hiding enables a significant reduction in routing traffic. Also, the routing within the area is determined only by the area's own topology lending the area protection from bad routing data. Keeping area topologies separate, OSPF protocol passes less routing traffic than it would pass if the AS was not partitioned. Furthermore, this partitioning creates two different types of OSPF routing, depending on whether the source and destination are in the same areas or are in different areas.

The shortest path first (SPF) routing algorithm is the basis for OSPF operations. After a router is assured that its interfaces are operating, it uses the OSPF Hello protocol to acquire neighbors which are routers with interfaces to a common network. The router sends hello packets to its neighbors and receives their hello packets. In addition to helping acquire neighbors, hello packets also act as means to let routers know what other routers are still functioning.

Among the different areas of the AS, an OSPF backbone (or area 0) is responsible for distributing routing information between areas. As the backbone itself is an OSPF area, all backbone routers use the same procedures and algorithms to maintain routing information within the backbone as the routers of any other area. The backbone topology is invisible to all routers within the other areas.

Stability and redundancy are the most important criteria for the backbone. Stability is increased by keeping the backbone size reasonable. Insofar as every router in the backbone needs to re-compute its routes after every link-state change, keeping the backbone small reduces the likelihood of a change and reduces the amount of CPU cycles required to re-compute the routes.

The main issue when implementing a multi-area OSPF Autonomous System is to have a very reliable backbone since all communications are transmitted through the backbone which, therefore, must be available all the time. A solution to this problem is to duplicate nodes and links, and in particular the routers connecting an area to the backbone called Autonomous System Border Routers (ASBR), which minimizes the risk of an area from becoming disconnected from the backbone. However, such a duplication is not sufficient in view of well known OSPF storms as well as disruptive software upgrades which may prevent the backbone infrastructure from being used a part of time.

Publication entitled "OSPF Version 2" MOY J, Request for comments (RFC) 2328 April 1998, pages 1-244, <URL:http://www.faqs.org/ftp/rfc/pdf./rfc2328.txt.pdf>
documents version 2 of the OSPF protocol. OSPF is a link-state routing protocol. It is designed to be run internal to a single Autonomous System. Each OSPF router maintains an identical database describing the Autonomous System' topology. From this database, a routing table is calculated by constructing a shortest path tree. OSPF recalculates routes quickly in the face of topological changes, utilizing a minimum of routing protocol traffic. OSPF provides support for equal-cost multipath. An area routing capability is provided, enabling an additional level of routing protection and a reduction in routing protocol traffic. In addition, all OSPF routing protocol exchanges are authenticated.

Publication entitled "QoS Routing Mechanisms and OSPF Extensions" APOSTOPOULOS G. EY AL. Request for comments (RFC) 2676 August 1999, pages 1-50, <URL:http://www.faqs.org/ftp/rfc/pdf/rfc2676.txt.pdf>
describes extensions to the OSPF protocol to support QoS routes. The focus of this document is on the algorithms used to compute QoS routes and on the necessary modifications to OSPF to support this function, e.g., the information needed, its format, how it is distributed, and how it is used by the QoS path selection process. Aspects related to how QoS routes are established and managed are also briefly discussed. The goal of this document is to identify a framework and possible approaches to allow deployment of QoS routing capabilities with the minimum possible impact to the existing routing infrastructure. In addition, experience from an implementation of the proposed extensions in the GateD environment, along with performance measurements is presented.

### Summary of the invention

Accordingly, the main object of the invention is to provide an Autonomous System (AS) in which the backbone is divided into two virtual sub-areas and wherein every communication between two areas uses a route which goes through only one of the two sub-areas.

The invention relates therefore to a data communication system of the type wherein a plurality of contiguous transmission networks constitute an Autonomous System (AS) using the Open Shortest Path First (OSPF) protocol for the exchange of information, the system being divided into several areas including an area 0 or backbone responsible for distributing routing information between the other areas, and two contiguous areas being linked by area border routers which maintain each separate topological data base for each area. The backbone is divided into two sub-areas and comprises at least a couple of a first and a second adjacent splitting routers with the first splitting router being included in one sub-area and the second splitting router being included in the other sub-area. The topological data base of each splitting router is set up to define a high metric for the link between the splitting routers in order to prevent any type of data traffic other than link-state messages (LSA) from being transmitted between the splitting routers.

### Brief description of the drawings

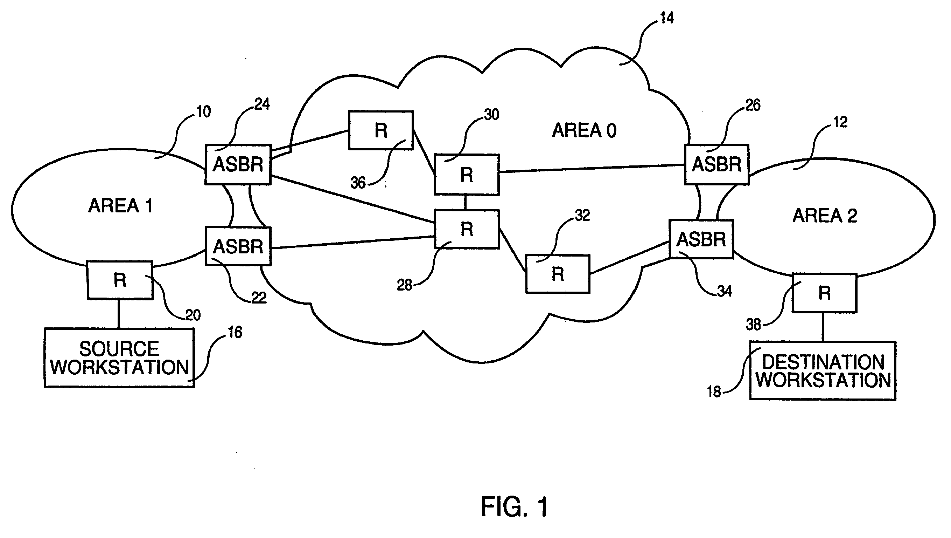

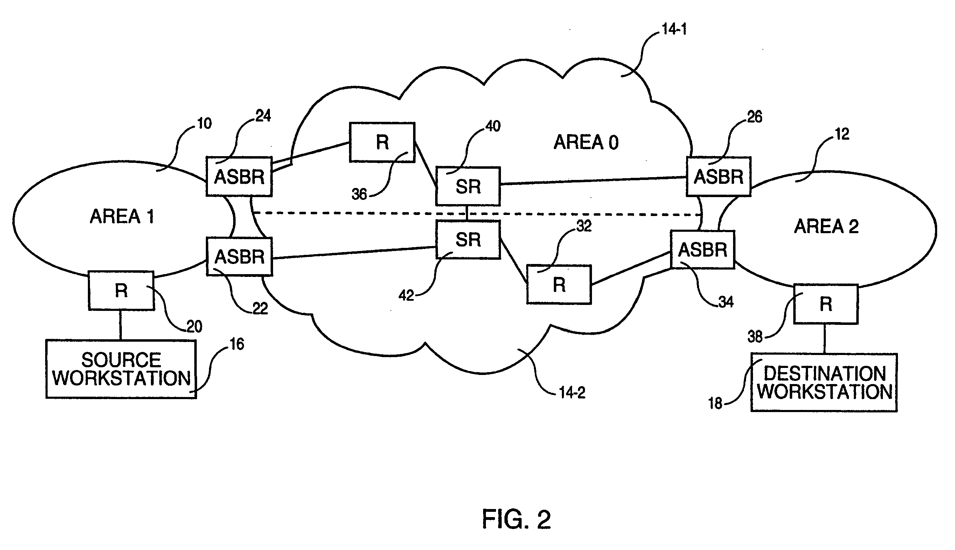

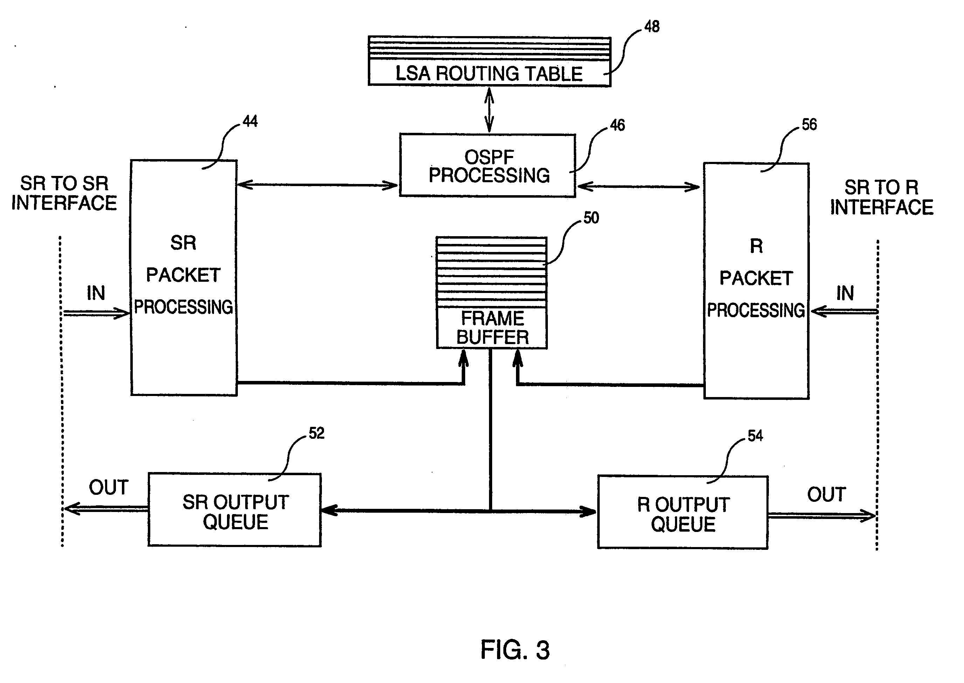

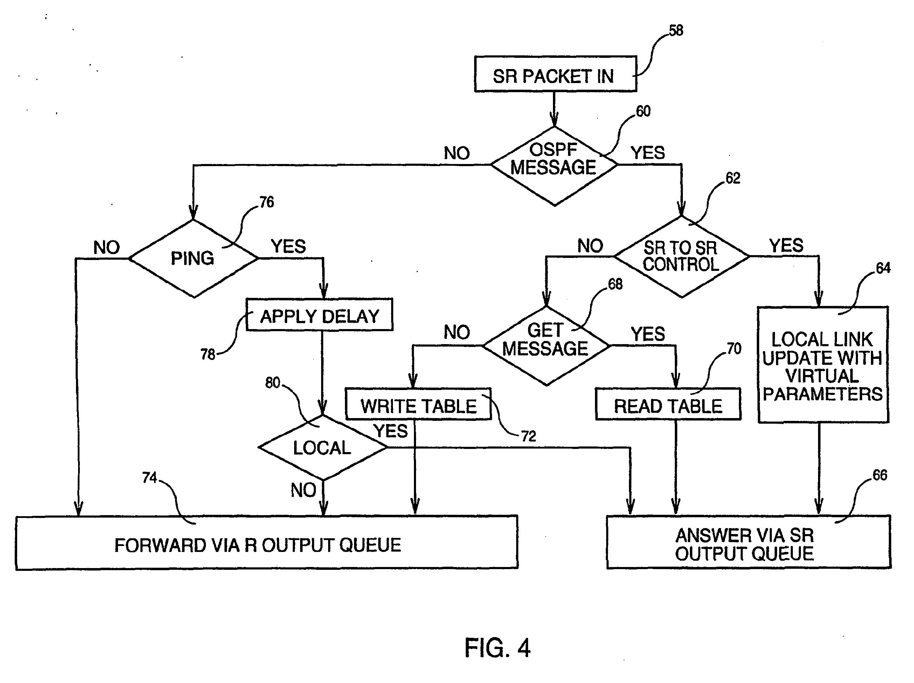

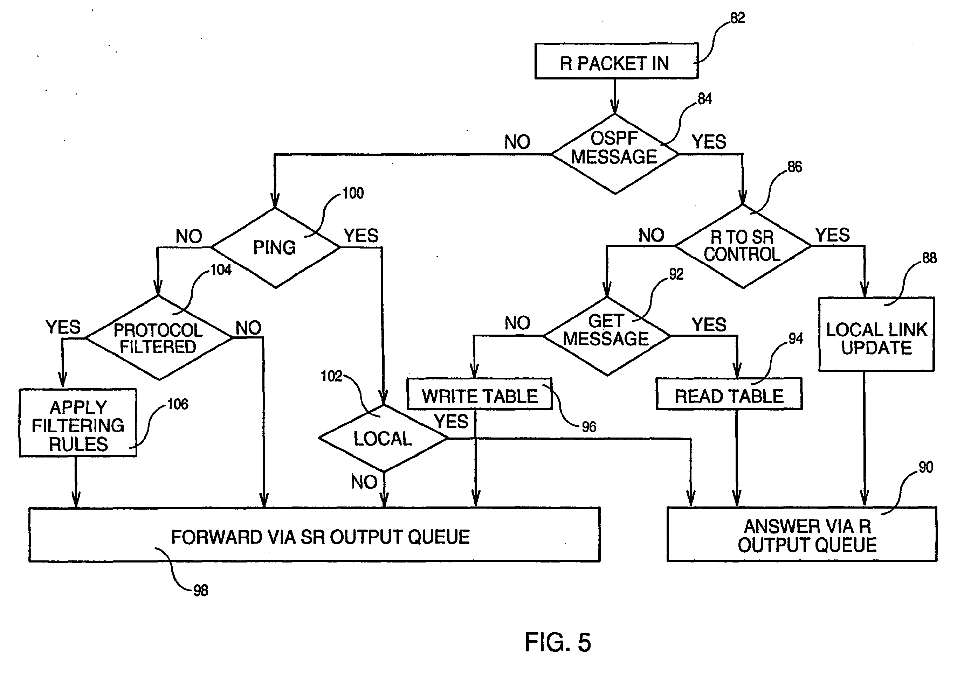

The above and other objects, features and advantages of the invention will be better understood by reading the following more particular description of the invention in conjunction with the accompanying drawings wherein :
■ Fig. 1 represents schematically a standard autonomous system including two areas and a backbone.
■ Fig. 2 represents schematically an autonomous system including two areas and a backbone divided into two sub-areas according to the invention.
■ Fig. 3 is schematic block diagram of a splitting router used in an autonomous system according to the invention.
■ Fig. 4 is a flow chart of the packet processing in a splitting router when the packet is received on the interface between the two splitting routers.
■ Fig. 5 is a flow chart of the packet processing in a splitting router when the packet is received on the interface between the splitting router and a router of the sub-area.

### Detailed description of the invention

Fig. 1 represents a standard Autonomous System (AS) using the Open Shortest Path First (OSPF) protocol which is divided into three areas, a first area 10, a second area 12 and an area 0 or backbone 14. When a source workstation 16 wants to exchange data with a destination workstation 18, it may use several routes. The path goes through router 20 in area 10 and then goes through backbone 14 either through Autonomous System Border Router (ASBR) 22 or ASBR 24 depending on the shortest path defined in the routing data base of router 20. when using ASBR 22, the path to area 12 may exit the backbone 14 and enter area 12 either by ASBR 26 through intermediate routers 28 and 30 or by ASBR 34 through intermediate routers 28 and 32. When using ASBR 24, the path to area 12 may exit the backbone 14 and enter area 12 either by ASBR 26 through intermediate routers 36 and 30 or by ASBR 34 through intermediate routers 28 and 32.

Note that the choice between several paths is determined by the metrics which are associated with the links between the routers. Finally, the path from ASBR 26 or ASBR 34 to destination workstation 18 is made through router 38.

According to the invention, the AS illustrated in Fig. 2 is the same system as the one of Fig. 1 wherein backbone 14 has been divided into two sub-areas 14-1 and 14-2 separated by a dotted line.

Source workstation 16 may use several routes to reach destination workstation 18, but the number of these routes is limited. Thus, if the traffic from source workstation 16 enters via ASBR 22, it can only enter area 12 via ASBR 34 as all data routes to ASBR 26 will be dissuasive. A possible route is through intermediate routers 28 and 32. Similarly, if the traffic from source workstation 16 enters via ASBR 24, it can only exit the area 0 and enter area 12 via ASBR 26 as all data routes to ASBR 34 will be dissuasive. A possible route is through intermediate routers 36 and 30.

According to the invention, a couple of adjacent splitting routers (SR) 40 and 42 are located respectively in each sub-area 14-1 and 14-2. These routers insure the continuity of the OSPF communications while they are blocking data traffic between the two sub-areas. Note that it is possible to have more than one couple of splitting routers to implement the system according to the invention.

An essential feature of the invention is that the cost of the link between SR 40 and SR 42 is set at a very high value in the routing data base whatever type of traffic it is. Link state advertisement (LSA) messages transmit this high cost to minimize the traffic that may transit between these splitting routers. Routers, when building their own SPF trees, will have a very low probability to use this link in their data path. For this, the routing information such as LSA is not stopped to maintain the area 0 coherence but data base parameters may be set to virtual values to get a behavior as if area 0 was really divided.

Each splitting router 40 or 42 includes a functional block which is schematically illustrated in Fig. 3. Such a functional block includes one interface with the linked splitting router of the other sub-area (SR to SR interface) and one or several interfaces with the routers included in the same sub-area and directly linked to the splitting router being considered (SR to R interface).

When a frame arrives on the SR to SR interface, a first identification occurs in SR packet processing unit 44 to check whether it is an OSPF message such as a Hello packet. If so, the packet is forwarded to OSPF processing unit 46 which updates LSA routing table (topological data base) 48 or takes information from this table to send it to SR packet processing unit 44 for transmission via frame buffer 50 to either SR output queue 52 if it is an answer to an Hello message or to R output queue 54 if a Hello message has to be transmitted to other routers of the sub-area. Other types of packets received by SR packet processing 44 are transmitted via frame buffer 50 to the appropriate SR to SR interface or SR to R interface, or are filtered according to rules defined by the administrator of the AS. Filtering rules may be to block the corresponding flow or to delay it as an example.

At this point, it is useful to recall that OSPF link state advertisement (LSA) contained in a Hello message specify the metrics to be used. In LSA, the metrics indicate the cost of each link in a described path. Generally, each link is given a metric based by default on its bandwidth. The metric for a specific link is the inverse of the bandwidth for this link. The metric for a route is the sum of the metrics for all the links of the route. The cost (corresponding to the metric) of an interface in OSPF Is an indication of the overhead to send packets across this interface, and is therefore inversely proportional to the bandwidth of the interface.

According to the invention, the administrator of the AS sets up a very high cost for the link between the two splitting routers by transmitting to the LSA routing table of each splitting router Hello messages containing virtual LSAs indicating a narrow bandwidth (e.g. 56k bytes or less rather than 10M bytes). It must be noted that other metrics such as Type Of Service (TOS) may be used to build LSA routing tables of the splitting routers. In such a case, the TOS bits are modified in order to filter services that may not use the link between the splitting routers.

When a frame arrives on the SR to R interface, a first identification occurs in R packet processing unit 56 to check whether it is an OSPF message such as a Hello packet. If so, the packet is forwarded to OSPF processing unit 46 which updates LSA routing table (topological data base) 48 or takes information from this table to send it to SR packet processing unit 56 for transmission via frame buffer 50 to either R output queue 54 if it is an answer to an Hello message or to SR output queue 52 if a Hello message has to be transmitted to other routers of the sub-area. Other types of packets received by R packet processing unit 56 are transmitted via frame buffer 50 to the appropriate SR interface to SR interface or SR to R interface, or are filtered according to rules defined by the administrator of the AS. It may be the case with a node proprietary protocol for update that may be stopped at SR level.

The objective of the above is to prevent most of the frames coming from another router within the same sub-area to go through the splitting router toward the linked splitting router of the other sub-area. Nevertheless, some packets may be authorized to transit such as ICMP packets or SNMP packets if a dedicated network management is implemented on each sub-area. In fact, there may be access lists authorizing some source workstations to go through the splitting routers whereas filtering other ones. The filtering may be dynamically changed to take network changes into account.

The different steps which are implemented by the functional block of a splitting router are represented in Fig. 4 and Fig. 5 when a packet is received respectively on SR to SR interface or SR to R Interface.

Referring to Fig. 4, when a packet comes from the SR to SR interface (step 58), it is checked whether it is a Hello packet (OSPF control message) (step 60). If so, it is checked whether it is a control message between the two splitting routers for agreeing or updating virtual parameters such as the link metric (step 62). If so, this is made (step 64) and an update confirmation message is sent on the SR output queue (step 66). If it is an update for other links/devices or a request for getting table contents, the normal Hello message process is performed. In such a case, it is determined whether the message is a get message (step 68). If so, the routing table is read (step 70), and an answer Hello message is built and sent back to the requester via the SR output queue (step 66). When it is not a get message, an update is performed by a write table (step 72). Then, an update message is forwarded to neighbor devices by putting it on the R output queue (step 74).

When the message received on the SR to SR interface is not a Hello message, it is determined whether this message is a Ping (ICMP protocol) (step 76). It must be noted that a Ping is a message sent to a specified destination host as an "echo" message used in the ICMP protocol. Such a message requests an "echo reply" message from the destination host for measuring the round trip time. Ping messages constitute an important feature of the invention insofar as a delay is artificially added in the splitting router to simulate a link having bad performance. The purpose of this function is to prevent the other routers in the AS from using this route. Thus, delay and throughput of the link can also be taken into account even though the virtual metric stored in the routing table is very high as explained above.

Therefore, if the message is a Ping message, a delay is applied (step 78) by retaining the message in a buffer during a predefined time. Then, it is determined whether the Ping destination address is the local splitting router or another splitting router located in the other sub-area (step 80). If the destination is the local splitting router, it is put in the SR output queue (step 66). Otherwise, it is put in the R output queue (Step 74).

Referring to Fig. 5, when a packet comes from the SR to R interface (step 82), it is checked whether it is a Hello packet (OSPF control message) (step 84). If so, it is checked whether it is a control message between the two routers for agreeing or updating real parameters such as the link metric (step 86). If so, this is made (step 88) and an update confirmation message is sent on the R output queue (step 90). If it is an update for other links/devises or a request for getting table contents, the normal Hello message process is performed. In such a case, it is determined whether the message is a get message (step 92). If so, the routing table is read (step 94), and an answer Hello message is built and sent back to the requester via the R output queue (step 90). When it is not a get message, an update is performed by a write table (step 96). Then, an update message is forwarded to neighbor devices by putting it on the R output queue (step 98).

When the message received on the SR to R interface is not a Hello message, it is determined whether it is a Ping message (step 100). If so, it is then determined whether the Ping destination address is the local splitting router or another router in the other sub-area (step 102). If the destination is the local splitting router, the message is put in the R output queue (step 90). Otherwise, it is put in the SR output queue (step 98).

If the received message is neither an OSPF message nor a Ping message, it is determined whether it has to be filtered by a firewall function (step 104). If so, filtering rules are applied (step 106) and then, the packet is sent to the SR output queue (step 98). If it is not the case, the packet is also sent to the SR output queue without applying filtering rules thereto. Note that the filtering rules may be based on the protocol number, the source and/or the destination address as any legacy firewall. This filtering allows also to dynamically open doors for some traffic when necessary, such as management flows. For example, it can prevent software updates from being propagated on all the area to avoid the AS to completely fall down due to a bad level update. Data traffic may also be filtered if necessary to have two separate data networks in area 0 but may be open in some sub-area failure cases.

## Claims

1. Data communication system of the type wherein a plurality of contiguous transmission networks constitute an Autonomous System AS using the Open Shortest Path First OSPF protocol for the exchange of information, said system being divided into several areas including an area 0 or backbone (14) adapted to distribute routing information between the other areas (10, 12), two contiguous areas being linked by area border routers (22, 24, 26, 34) which are adapted to maintain each separate topological data base for each area ; said system being **characterized in that** said backbone is divided into two contiguous sub-areas (14-1, 14-2);
**in that** said backbone comprises at least a couple of a first and a second adjacent splitting routers (40, 42) with said first splitting router being included in one sub-area and said second splitting router being included in the other sub-area, the topological data base of each said splitting router being adapted to be set up to define a high metric for the link between said splitting routers in order to prevent any type of data traffic other than link-state messages LSA from being transmitted between said splitting routers;
**in that** said backbone (14) is adapted to be linked to any other contiguous area by at least two area border routers ASBR (22, 24 or 26, 34), one of the two ASBRs being adapted to link said contiguous area to one sub-area of the backbone and the other one being adapted to link said contiguous area to the other sub-area of the backbone so that the exchange of information between two areas contiguous to said backbone is achieved by using a route between two ASBRs linking each of said areas to either of said sub-areas of the backbone.

2. Data communication system according to claim 1, wherein each of said first (40) and second (42) splitting routers includes a functional block comprising :
- a topological database (48);
- an Open Shortest Path First processing unit (46) for updating the topological database in response to link state messages;
- a splitting router packet processing unit (44) for processing messages received over the link that connects the first splitting router and the second splitting router, and for forwarding to the Open Shortest Path First processing unit hello messages received over the link that connects the first splitting router and the second splitting router;
- a router packet processing unit (56) for processing messages received over the sub-area in which the splitting router is included that is a sub-area of a backbone network, and for forwarding to the Open Shortest Path First processing unit hello messages received over the sub-area in which the splitting router is included and
- a buffer (50) for buffering messages output by the splitting router packet processing unit and the router packet processing unit.

3. Data communication system according to claim 2, wherein each splitting router further comprises :
- a splitting router output queue (52) for receiving messages from the buffer and for queuing messages received from the buffer in preparation for sending messages received from the buffer over the link connecting the first splitting router and the second splitting router; and
- a router output queue (54) for receiving messages from the buffer and for queuing messages received from the buffer in preparation for sending messages received from the buffer over the sub-area in which the splitting router is included.

4. Data communication system according to claim 1, comprising means for updating the topological data base of a splitting router with parameters defining a very low bandwidth for the link between said splitting routers (40, 42).

5. Data communication system according to claim 4, comprising means for updating the topological data base of a splitting router with Type Of Service TOS bits resulting in filtering services that may not use the link between said splitting routers (40, 42).

6. Data communication system according to claim 4 or 5 wherein the update of the topological data base of said splitting router (40) is achieved by an OSPF message received from the other splitting router (42).

7. Data communication system according to any one of claims 4 to 6, further comprising means for applying an added delay to the round trip time of a Ping message received by said splitting router (40) from the other splitting router (42).

8. Data communication system according to claim 7 wherein said delay added to the round trip time of said Ping message is obtained by buffering said Ping message during a predefined time.

## Patentansprüche

1. Datenübertragungs-System von der Art, bei der eine Vielzahl von benachbarten Übertragungs-Netzwerken ein Autonomes System (AS) bilden, das das offene Kürzester-Pfad-zuerst- (Open-Shortest-Path-First, OSPF-) Protokoll zur Übertragung von Daten verwendet, wobei das System in mehrere Bereiche unterteilt ist, die einen Bereich 0 oder ein Hauptnetz (backbone) (14), das zum Verbreiten von Leitweglenkung-Daten zwischen den anderen Bereichen (10, 12) geeignet ist, beinhalten, wobei zwei benachbarte Bereiche durch Bereichsgrenzen-Leitweglenkungrechner (22, 24, 26, 34) verbunden sind, die zum Pflegen jeder getrennten Topologie-Datenbank für jeden Bereich geeignet sind;
wobei das System **dadurch gekennzeichnet ist,**
**dass** das Hauptnetz in zwei benachbarte Teilbereiche (14-1, 14-2) unterteilt ist;
**dass** das Hauptnetz wenigstens ein Paar aus einem ersten und einem zweiten Trennungs-Leitweglenkrechner (40, 42) umfasst, wobei der erste Trennungs-Leitwegrechner in einem Teilbereich und der zweite Trennungs-Leitwegrechner in einem anderen Teilbereich enthalten sind, wobei die Topologie-Datenbank jedes Trennungs-Leitwegrechners zum Festlegen einer hohen Maßzahl für die Verbindung zwischen den Trennungs-Leitwegrechnern geeignet ist, um das Übertragen jeder Art von Daten, bei denen es sich nicht um Verbindungsstatus-Meldungen (LSA) zwischen den Trennungs-Leitwegrechnern handelt, zu verhindern;
**dass** das Hauptnetz (14) so beschaffen ist, dass es mit jedem anderen benachbarten Bereich durch wenigstens zwei Bereichsgrenzen-Leitwegrechner (ASBR) (22, 24 oder 26, 34) verbunden ist, wobei einer der beiden ASBRs zum Verbinden des benachbarten Bereichs mit einem Teilbereich des Hauptnetzes und der andere zum Verbinden des benachbarten Bereichs mit dem anderen Teilbereich des Hauptnetzes geeignet ist, sodass der Datenaustausch zwischen den beiden am Hauptnetz angrenzenden Bereichen durch das Verwenden einer Route zwischen zwei ASBRs erreicht wird, die jeden der Bereiche mit jedem der Teilbereiche des Hauptnetzes verbinden.

2. Datenübertragungs-System nach Anspruch 1, wobei der erste (40) und der zweite (42) Trennungs-Leitwegrechner jeweils einen funktionellen Block enthalten, der Folgendes umfasst:
- eine Topologie-Datenbank (48);
- eine Open-Shortest-Path-Verarbeitungseinheit (46) zum Aktualisieren der topologischen Datenbank in Reaktion auf Verbindungsstatus-Meldungen;
- eine Trennungs-Leitwegrechner-Paketverarbeitungseinheit (44) zum Verarbeiten von Meldungen, die über die Verbindung empfangen wurden, die den ersten Trennungs-Leitwegrechner und den zweiten Trennungs-Leitwegrechner verbindet, und zum Weiterleiten von Hallo-Meldungen an die Open-Shortest-Path-Verarbeitungseinheit, die über die Verbindung empfangen wurden, die den ersten Trennungs-Leitwegrechner und den zweiten Trennungs-Leitwegrechner verbindet;
- eine Leitwegrechner-Paketverarbeitungseinheit (56) zum Verarbeiten von Meldungen, die über den Teilbereich empfangen wurden, in dem sich der Trennungs-Leitwegrechner befindet und bei dem es sich um einen Teilbereich eines Haupt-Netzwerks handelt, und zum Weiterleiten von Hallo-Meldungen an die Open-Shortest-Path-First-Verarbeitungseinheit, die über den Teilbereich empfangen wurden, in dem sich der Trennungs-Leitwegrechner befindet; und
- einen Pufferspeicher (50) zum Puffern von Meldungen, die von der Paketverarbeitungseinheit der Trennungs-Leitwegrechner und der Leitwegrechner-Paketverarbeitungseinheit ausgegeben wurden.

3. Datenübertragungs-System nach Anspruch 2, worin jeder Trennungs-Leitwegrechner ferner umfasst:
- eine Ausgangswarteschlange (52) des Trennungs-Leitwegrechners zum Empfangen von Meldungen von dem Puffer und zum Einreihen vom Puffer empfangener Meldungen in die Warteschlange, um das Senden der von dem Puffer empfangenen Meldungen über die Verbindung vorzubereiten, die den ersten Trennungs-Leitwegrechner und den zweiten Trennungs-Leitwegrechner verbindet; und
- eine Ausgangswarteschlange (54) des Leitwegrechners zum Empfangen von Meldungen von dem Puffer und zum Einreihen vom Puffer empfangener Meldungen in die Warteschlange, um das Senden der vom Puffer empfangenen Meldungen über den Teilbereich vorzubereiten, in dem sich der Trennungs-Leitwegrechner befindet.

4. Datenübertragungs-System nach Anspruch 1, das ein Mittel zum Aktualisieren der Topologie-Datenbank eines Trennungs-Leitwegrechners mit Parametern umfasst, die eine sehr geringe Bandbreite für die Verbindung zwischen den Trennungs-Leitwegrechnern (40, 42) festlegen.

5. Datenübertragungs-System nach Anspruch 4, das ein Mittel zum Aktualisieren der Topologie-Datenbank eines Trennungs-Leitwegrechners mit Dienstart- (Type of Service, TOS-) Bits umfasst, die zum Filtern von Diensten führen, die die Verbindung zwischen den Trennungs-Leitwegrechnern (40, 42) nicht verwenden dürfen.

6. Datenübertragungs-System nach Anspruch 4 oder 5, in dem die Aktualisierung der Topologie-Datenbank des Trennungs-Leitwegrechners (40) durch eine von dem anderen Trennungs-Leitwegrechner (42) empfangene OSPF-Meldung erreicht wird.

7. Datenübertragungs-System nach einem der Ansprüche 4 bis 6, das ferner ein Mittel zum Anwenden einer zu der Umlaufzeit hinzugefügten Verzögerung einer Ping-Meldung umfasst, die durch den Trennungs-Leitwegrechner (40) von dem anderen Trennungs-Leitwegrechner (42) empfangen wurde.

8. Datenübertragungs-System nach Anspruch 7, in dem die zu der Umlaufzeit der Ping-Meldung hinzugefügte Verzögerung durch das Puffern der Ping-Meldung während einer vorgegebenen Zeit erhalten wird.

## Revendications

1. Système de communication de données du type, dans lequel une pluralité de réseaux de transmission contigus constituent un Système Autonome AS, utilisant le protocole Open Shortest Path First OSPF (Ouvrir le Plus Court Chemin D'abord) pour l'échange d'information, ledit système étant divisé en plusieurs zones incluant une zone 0 ou zone centrale (14), adaptée pour distribuer une information d'acheminement entre les autres zones (10, 12), deux zones contigüs étant liées par des routeurs de frontière de zone (22, 24, 26, 34), qui sont adaptés pour maintenir chaque base de données topologique séparée pour chaque zone ; ledit système étant **caractérisé en ce que** ladite zone centrale est divisée en deux sous zones (14-1, 14-2) contigüs ;
**en ce que** ladite zone centrale comprend au moins un couple d'un premier et d'un second routeurs de division (40, 42) adjacents, ledit premier routeur de division adjacent étant inclus dans une sous-zone et ledit second routeur de division étant inclus dans l'autre sous-zone, la base de données topologique de chaque dit routeur de division étant adaptée pour être établie pour définir une métrique élevée pour la liaison entre lesdits routeurs de division, afin d'empêcher qu'un type quelconque de trafic de données, autre que des messages link-state (état de liaison) LSA, soit transmis entre lesdits routeurs de division ;
**en ce que** ladite zone centrale (14) est adaptée pour être liée à une autre zone contigü quelconque par au moins deux routeurs de frontière de zone ASBR (22, 24 ou 26, 34), l'un des deux ASBRs étant adapté pour relier ladite zone contigü à une sous-zone de la zone centrale et l'autre étant adapté pour relier ladite zone contigü à l'autre sous-zone de la zone centrale, de manière que l'échange d'information entre deux zones, contigüs à ladite zone centrale, soit obtenu en utilisant un chemin entre deux ASBRs reliant chacune desdites zones à l'une desdites sous-zones.

2. Système de communication de données selon la revendication 1, dans lequel chacun, desdits premier (40) et second (42) routeurs de division, comprend un bloc fonctionnel, comprenant :
- une base de données topologique (48) ;
- une unité de traitement Open Shortest Path First (46), pour mettre à jour la base de données topologique, en réponse aux messages d'état de liaison ;
- une unité de traitement de paquets de routeur de division (44), pour traiter des messages ayant été reçus sur les liaisons qui relient le premier routeur de division et le second routeur de division, et pour transmettre à l'unité de traitement Open Shortest Path First des messages hello, reçus sur la liaison qui relie le premier routeur de division et le second routeur de division ;
- une unité de traitement de paquets de routeur (56), pour traiter des messages reçus sur la sous-zone dans laquelle le routeur de division est inclus, c'est-à-dire une sous-zone d'un réseau de base ou d'interconnexion, et pour transmettre à l'unité de traitement Open Shortest Path First des messages hello, reçus sur la sous-zone dans laquelle le routeur de division se trouve ; et
- un tampon (50), pour mettre en tampon des messages fournis par l'unité de traitement de paquets de routeur de division et l'unité de traitement de paquets de routeur.

3. Système de communication de données selon la revendication 2, dans lequel chaque routeur de division comprend en outre :
- une file d'attente de sortie de routeur de division (52), pour recevoir des messages provenant du tampon et pour mettre en file d'attente des messages reçus du tampon, en préparation à l'envoi de messages reçus du tampon sur la liaison reliant le premier routeur de division et le second routeur de division ; et
- une file d'attente de sortie de routeur (54), pour recevoir des messages provenant du tampon et pour mettre en file d'attente des messages reçus du tampon, en préparation à l'envoi de messages reçus du tampon sur la sous-zone dans laquelle le routeur de division est inclus.

4. Système de communication de données selon la revendication 1, comprenant des moyens pour mettre à jour la base de données topologique d'un routeur de division avec des paramètres définissant une très faible largeur de bande pour la liaison entre lesdits routeurs de division (40, 42).

5. Système de communication de données selon la revendication 4, comprenant des moyens pour mettre à jour la base de données topologique d'un routeur de division, avec des bits de type de service TOS, produisant le filtrage de services qui ne peuvent utiliser la liaison entre lesdits routeurs de division (40, 42).

6. Système de communication de données selon la revendication 4 ou 5, dans lequel la mise à jour de la base de données topologique dudit routeur de division (40) est obtenue par un message OSPF reçu de l'autre routeur de division (42).

7. Système de communication de données selon l'une quelconque des revendications 4 à 6, comprenant en outre des moyens, pour appliquer un délai ajouté au temps de transmission aller-retour d'un message de Connexion Aller, reçu par ledit routeur de division (40) en provenance de l'autre routeur de division (42).

8. Système de communication de données selon la revendication 7, dans lequel ledit délai ajouté au temps de transmission aller-retour dudit message de Connexion Aller est obtenu en mettant en tampon ledit message de Connexion Aller pendant une durée prédéfinie.
